(19) Europäisches Patentamt
European Patent Office
Office européen des brevets

(11) Publication number: **0 108 373**
**B1**

(12) # EUROPEAN PATENT SPECIFICATION

(45) Date of publication of patent specification: **15.02.89**

(21) Application number: **83110881.6**

(22) Date of filing: **31.10.83**

(51) Int. Cl.⁴: **C 08 F 299/04,** C 08 F 220/28, C 08 F 220/20, C 08 L 67/06, C 08 G 18/68, C 08 L 61/20

(54) **Process for the preparation of polymeric compositions.**

(30) Priority: **02.11.82 US 438497**

(43) Date of publication of application:
**16.05.84 Bulletin 84/20**

(45) Publication of the grant of the patent:
**15.02.89 Bulletin 89/07**

(84) Designated Contracting States:
**AT BE CH DE FR GB IT LI LU NL SE**

(56) References cited:
**EP-A-0 017 917**
**EP-A-0 044 393**
**GB-A-1 257 638**

**PATENT ABSTRACTS OF JAPAN vol. 7, no. 43, 19th February 1983, page (C-152) (1188); & JP-A-57-195714 (DAICEL) 01-12-1982**

**The file contains technical information submitted after the application was filed and not included in this specification**

(73) Proprietor: **UNION CARBIDE CORPORATION**
**39 Old Ridgebury Road**
**Danbury Connecticut 06817 (US)**

(72) Inventor: **Weber, Robert Joseph, Jr.**
**Hiland Drive R.D. 1**
**Belle Mead New Jersey 08502 (US)**
Inventor: **Smith, Donald Foss, Jr.**
**988 Buxton Road**
**Bridgewater New Jersey 08807 (US)**

(74) Representative: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

(56) References cited:
**PATENT ABSTRACTS OF JAPAN vol. 7, no. 28, 4th February 1983, page (C-149) (1173); & JP-A-57-185236 (DAICEL) 15-11-1982**

**PATENT ABSTRACTS OF JAPAN vol. 3, no. 147, 5th December 1979, page 80 C 66; & JP-A-54-125232 (DAINIPPON INK KAGAKU KOGYO) 28-09-1979**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 108 373 B1**

## Description

This invention is directed in general to a process for the preparation of polymeric compositions, in particular, the polymerization of a reactive monomer derived from the reaction product of a hydroxyalkyl acrylate or methacrylate and a lactone with other ethylenically unsaturated monomers. The polymeric compositions can be made into high quality industrial finishes by incorporation of various conventional crosslinking agents, plus other normally used formulating ingredients.

In the field of coating compositions, efforts have been made and are presently being made to increase the flexibility and hardness of cured coatings and finishes in order to make them more suitable for such uses as automotive finishes, appliance finishes, business machine finishes, house siding, general metal finishing and the like. The inclusion of epsilon caprolactone into coating compositions is known to increase the flexibility of the coating films. See, for example, US—A—30,234 (Reissue) in which epsilon caprolactone is reacted with a copolymer, e.g., styrene and 2-hydroxyethyl acrylate, and thereafter with a crosslinking agent, e.g., melamine formaldehyde, to give a crosslinked modified copolymer having desirable flexibility, hardness and chemical durability. The polymeric compositions prepared according to the present invention utilize epsilon caprolactone in novel oligomeric compositions which can polymerize with other ethylenically unsaturated monomers and thereafter can be crosslinked to give polymeric coating compositions having a highly desirable combination of flexibility and hardness in addition to excellent adhesiveness, hydrolytic stability, chemical compatibility and solvent resistance. The novel oligomeric compositions are described more fully in copending EP—A—108 372 filed on an evan date herewith.

US—A—3,655,631 describes, as in Example 1 thereof, the polymerization of epsilon-caprolactone with hydroxyethyl acrylate as initiator in the presence of 0.1% by weight of p-toluene sulphonic acid as catalyst at a temperature of 45°C for a time of 4 hours. The catalyst is described as an organic acid catalyst selected from the group consisting of halogen substituted aliphatic carboxylic acids other than trichloroacetic acid, alkane sulphonic acids, benzene sulphonic acid and lower alkyl substituted benzene sulphonic acids. The product is described in said Example I as a solid unsaturated polyester having a molecular weight of about 960. Example 8 of said patent describes the polymerization of hydroxyethyl methacrylate and epsilon-caprolactone using 0.1% by weight of the product p-toluene sulphonic acid catalyst. The polyester product is described as having a molecular weight of 437 and being a viscous liquid. The polyesters produced in said patent have residual acid catalyst present in relatively large amounts (i.e., about 1000 parts per million). In Examples 1 and 8 the described polymerization is stated to be complete. The epsilon caprolactone·hydroxyethyl acrylate product of Example 1 was further copolymerized with styrene (Examples 2 and 3) and vinyl acetate (Example 4).

However, the presence of such strong acid catalyst in the polyester product could lead to degradation of the product. Also, its presence may decrease the shelf life and pot life of coating systems produced from oligomers containing the polyester product and certain cross-linking agents. The use of a polyester product containing such strong residual acids may generate highly coloured by-products that may be detrimental in some coating applications.

US—A—4,188,472 describes reacting (a) a lactone with an ester-containing acrylyl or alpha-substituted acrylyl group and one or two hydroxyl groups and (b) reacting the product of (a) with an isocyanate. Specifically, in Examples I to III, hydroxyethyl acrylate is added to epsilon-caprolactone which was heated to 130°C (Example I) or 120°C (Examples II and III). Large amounts of a catalyst such as TPT titanate (greater than 2000 parts per million — Example I) or a mixture of stannous octanate and dibutyltin dilaurate (Examples II and III) in amounts greater than 1500 parts per million were added to the reaction mixture. Additionally, the reaction carried out in these Examples utilizes large amounts of inhibitor, i.e., greater than 5000 parts per million. The reaction is carried out at temperatures of 130°C for 6 hours (Example I) and 120°C for 8 hours (Examples II and III). The product of the reaction in these Examples is described as having a hydroxyl value of 162 (Example I), 318 (Example II) and 122 (Example III). In Example II the reaction is stated to be complete. The epsilon caprolactone-hydroxyethyl acrylate product of Examples I, II and III was further reacted with a diisocyanate.

However, the use of the large amounts of catalyst and inhibitor in the polymerization described in US—A—4,188,472 can have deleterious effects on the subsequent use of the lactone modified resin in polymerization or copolymerization reactions and/or crosslinking reactions.

EP—A—44 393 titled "Process for the Production of a (Meth) Acrylate Resin with Hydroxyl Groups and being modified by epsilon-Caprolactone" describes the reaction of at least one monoester of acrylic or methacrylic acid with an alkane diol with 2—4 carbon atoms in the molar ratio of 1.5:1 to 1:3 with epsilon-caprolactone. The reaction is described as occurring at a temperature of 60—130°C in the presence of an organotin compound. Specifically, in Example I an adduct from 2-hydroxyethyl acrylate and epsilon-caprolactone is prepared. 2-Hydroxyethylacrylate and epsilon-caprolactone is prepared. 2-Hydroxyethylacrylate and dibutyltin oxide are heated to 120°C and epsilon-caprolactone is added over the course of two hours. This mixture is heated for two more hours at 120°C. This Example was repeated and the reaction product was shown to contain greater than 50 weight percent of unreacted 2-hydroxyethyl acrylate. The epsilon caprolactone-hydroxyethyl acrylate product of Example 1 was further polymerized with methyl methacrylate, 2-ethylhexyl acrylate and 2-hydroxyethyl acrylate.

EP—A—17916 among others also discloses the reaction of a lactone with an hydroxyethylacrylate and

the subsequent polymerization with an ethylenically unsaturated monomer. However, in said document, too, the preferred amount of catalyst to be employed is much higher than the corresponding amount used in the processes of the present invention.

The present invention is directed to a process for preparing a polymeric composition comprising polymerizing one or more ethylenically unsaturated monomers with a composition comprising:

(a) 0 to 10, preferably 0 to 5, weight percent of a lactone,

(b) greater than 0 to about 20 weight percent, preferably less than 10 weight percent, of hydroxyethyl acrylate or methacrylate,

(c) 2 or less, preferably 1 or less, weight percent of diacrylates,

(d) 10, preferably 5, or less weight percent of products resulting from Michael addition, acrylic polymerization, transesterification reactions, or other side reactions,

(e) remainder to 100 weight percent of a reactive monomer of the following formula:

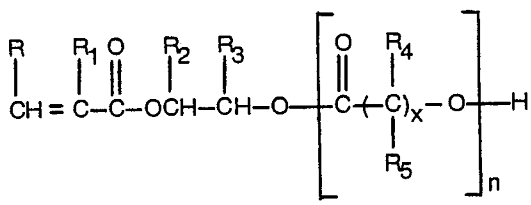

wherein R, $R_1$, $R_2$, and $R_3$ are independently hydrogen or methyl and $R_4$ and $R_5$ are independently hydrogen or alkyl of from 1 to 12 carbon atoms and x is from 4 to 7 and both n and the average value of n in the composition are equal to or greater than 1, and

(f) less than about 100 parts per million of catalyst.

The invention is further directed to a process for preparing a crosslinked polymeric coating composition comprising:

(1) polymerizing one or more ethylenically unsaturated monomers with a composition comprising:

(a) 0 to 10, preferably 0 to 5, weight percent of a lactone,

(b) greater than 0 to about 20 weight percent, preferably less than 10 weight percent of hydroxyethyl acrylate or methacrylate,

(c) 2 or less, preferably 1 or less, weight percent of diacrylates,

(d) 10, preferably 5, or less weight percent of products resulting from Michael addition, acrylic polymerization, transesterification reactions, or other side reactions,

(e) remainder to 100 weight percent of a reactive monomer of the following formula:

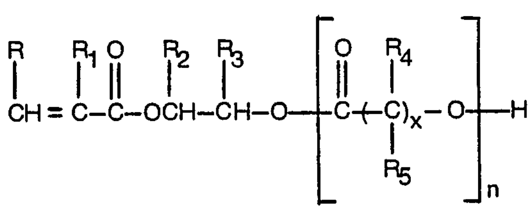

wherein R, $R_1$, $R_2$, and $R_3$ are independently hydrogen or methyl and $R_4$ and $R_5$ are independently hydrogen or alkyl of from 1 to 12 carbon atoms, preferably alkyl $C_1$—$C_6$, most preferably alkyl $C_1$—$C_4$, and hydrogen, e.g. methyl, ethyl, propyl, i-propyl, butyl, pentyl, hexyl, i-hexyl; and x is from 4 to 7 and both n and the average value of n in the composition are equal to or greater than 1, and

(f) less than about 100 parts per million of catalyst; and

(2) crosslinking the polymeric composition of (1) with an isocyanate resin or an amino resin selected from the group consisting of melamine formaldehydes, urea formaldehydes and benzoguanamine formaldehydes. The coating compositions of this invention exhibit highly desirable flexibility and stability, chemical compatability and solvent resistance. The polymeric composition and the crosslinked polymeric coating composition prepared by the above described processes are also part of this invention.

The novel oligomeric compositions utilized in the process of this invention in preparing the polymeric compositions and the crosslinked polymeric coating compositions are more fully described in copending EP—A—108 372 filed on an even date herewith. The oligomeric compositions are prepared by reacting a lactone with a hydroxyalkyl acrylate or methacrylate. The lactone used as the starting material is characterized by the following formula:

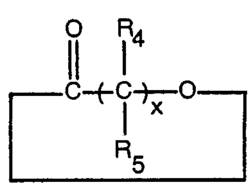

wherein $R_4$ and $R_5$ are hydrogen or alkyl of from 1 to 12 carbon atoms, and x is from 4 to 7. The preferred lactone is epsilon-caprolactone.

The hydroxyalkyl acrylates or methacrylates include 2-hydroxyethyl acrylate, hydroxypropyl acrylate, hydroxybutyl acrylate, 2-hydroxyethyl methacrylate, 2-hydroxypropyl methacrylate, 2-hydroxy-3-chloro propyl methacrylate, 2-hydroxy-3-chloro propyl acrylate, 2,3-dihydroxy propyl methacrylate, 2,3-dihydroxy propyl acrylate or mixtures thereof. Hydroxyproyl acrylate is preferred.

The oligomeric compositions are prepared by reacting the lactone with the hydroxyalkyl acrylate or methacrylate in the presence of less than about 100 parts per million of a catalyst. The catalyst which may be used herein includes one or more of organometallic compounds and other metallic compounds such as stannic chloride; ferric chloride and other Lewis, Bronsted and protonic acids. Preferred catalysts include stannous octoate, dibutyltin dilaurate, and other tin compounds, titanates such as tetraisopropyl titanate and butyl titanate.

The oligomer reaction is carried out at a temperature of from about 100 to about 140°C, preferably from about 120 to about 130°C. The reaction may be carried out at atmospheric pressure although higher or lower pressures may be used. The reaction is generally carried out in the presence of oxygen to inhibit polymerization of the hydroxyalkyl acrylate or methacrylate. The reaction is carried out for a period of from about 2 to about 20, preferably from about 3 to about 11 hours.

The oligomer reaction is carried out in the presence of a suitable inhibitor to prevent polymerization of the hydroxyalkyl acrylate or methacrylate double bond. These inhibitors include the monomethyl ether of hydroquinone, benzoquinone, phenothiazine, methylhydroquinone, 2,5-di-t-butylquinone, hydroquinone, and other common free radical inhibitors known in the art. The level of inhibitor used is less than 1000 parts per million and preferably less than 800 parts per million, and most preferably less than 600 parts per million.

The present polymeric compositions and crosslinked polymeric coating compositions can be prepared by conventional polymerization techniques in which the novel oligomeric composition is blended with one or more ethylenically unsaturated monomers in the presence of solvents, chain transfer agents and polymerization catalysts and heated to about 100°C to 200°C for about 2 to 6 hours. Solvents which can be used in these conventional polymerization techniques are well known in the art and include for example, methyl n-amyl ketone (2-heptanone), n-butyl alcohol and methyl ethyl ketone (2-butanone). Suitable chain transfer agents include t-dodecylmercaptan. Suitable polymerization catalysts include, for example, azo-bis-isobutyronitrile and benzoyl peroxide.

Suitable ethylenically unsaturated monomers which can be employed in the process of this invention include among others hydroxyl functional acrylic monomers, the esters of acrylic or methacrylic acid and monohydric alcohols, alpha, beta ethylenically unsaturated carboxylic acids and vinyl hydrocarbons. The hydroxyl functional acrylic monomers can include 2-hydroxyethyl acrylate and 2-hydroxyethyl methacrylate. Suitable esters of acrylic or methacrylic acid and monohydric alcohols include among others ethyl acrylate, n-butyl acrylate, t-butyl acrylate, isobutyl acrylate, 2-ethylhexyl acrylate, hexyl acrylate, decyl acrylate, cyclohexyl acrylate, methyl methacrylate, ethyl methacrylate, propyl methacrylate, isopropyl methacrylate, butyl methacrylate, isobutyl methacrylate and lauryl methacrylate. The preferred esters are ethyl acrylate and butyl acrylate. Suitable alpha, beta ethylenically unsaturated carboxylic acids include among others acrylic acid, methacrylic acid, itaconic acid and crotonic acid. Preferred are acrylic acid and methacrylic acid. Suitable vinyl hydrocarbons include, for example, styrene, alpha methylstyrene, vinyl toluene, t-butylstyrene and chlorostyrene. The preferred vinyl hydrocarbon is styrene. Other monomers such as vinyl acetate, acrylonitrile, vinyl chloride and methacrylonitrile can also be included in the polymeric compositions.

The concentration of the novel oligomers in the polymeric compositions prepared according to this invention can range from about 5 to about 90, weight percent preferably from about 20 to about 40 weight percent. The concentration of the other ethylenically unsaturated monomers in the polymeric compositions can range from about 90 to about 5 weight percent, preferably from about 60 to about 80 weight percent. The number average molecular weight of the polymeric compositions can range from 1,000 or less to about 100,000 or greater.

The polymeric compositions prepared according to the present invention utilize epsilon caprolactone in novel ologimeric compositions which are reacted with other ethylenically unsaturated monomers by addition polymerization. Epsilon caprolactone is not grafted onto the polymeric compositions. It is believed that a unique distribution of caprolactone along the polymer backbone is obtained by addition polymerization of the oligomer as opposed to polymers prepared by the grafting reaction. Polymeric compositions prepared by either addition polymerization or grafting of caprolactone can contain the same amount of caprolactone but the distribution of caprolactone along the polymer backbone would be different. In grafting, the caprolactone distributes along the polymer backbone in a statistical manner whereas, in addition polymerization of a caprolactone-containing oligomer, the caprolactone is distributed in a nonstatistical manner. Unique coating properties can be obtained utilizing the polymeric compositions prepared according to the present invention as opposed to polymeric compositions grafted with caprolactone. Also in the grafting reaction caprolactone may react with any acidic monomers used in preparing the polymer, whereas by using the oligomers no reaction with acidic monomers will occur.

The crosslinkable polymeric coating compositions prepared according to this invention contain an

isocyanate resin or an amino resin selected from the group consisting of melamine formaldehydes, urea formaldehydes and benzoguanamine formaldehydes. A melamine formaldehyde resin such as hexamethoxymethyl melamine is preferred. Butylolated melamine formaldehydes can also be used. The concentration of the amino resin in the polymeric coating compositions can range from about 10 to about 50 weight percent of the total weight of the coating composition.

In a preferred embodiment of the process of the invention according to which the crosslinked polymeric composition is prepared one or more ethylenically unsaturated monomers are present at a concentration of from about 5 to about 90 weight percent, the composition comprising components (a) to (f) is present at a concentration of from abot 90 to about 5 weight percent and the isocyanate resin or amino resin is present at a concentration of from about 5 to about 50 weight percent.

The crosslinkable polymeric coating compositions can also contain an organic solvent and a catalyst as optional components. Any of the conventional solvents used in the coatings industry can be used at a concentration preferably below 50 weight percent of the total weight of the coating composition. While larger amounts could conceivably be used, the use of larger amounts would destroy the high solids nature of the coating; solvents are generally added in the small amounts indicated to improve flowability during application of the coating composition to the substrate.

In some instances an acid catalyst might be desired to improve the efficiency of the isocyanate resin or amino resin crosslinking reaction during curing. The concentration of the catalyst can vary from zero to about 10 weight percent based on the total weight of the coating composition. The particular catalyst used and its concentration are dependent to a degree upon its catalytic activity and the specific components present in the coating composition. These catalysts are known to those skilled in the art and include hydrochloric acid sulfuric acid, p-toluene sulfonic acid, methane sulfonic acid dodecylbenzene sulfonic acid, phosphoric acid and its alkyl derivatives maleic acid, trimellitic acid, phthalic acid and succinic acid.

The crosslinkable polymeric coating compositions can also contain pigments, fillers, and other additives conventionally present in coating compositions in their conventional quantities. The particular ones selected are of no consequence to the basic invention. In preparing the crosslinkable polymeric coating compositions, the ingredients are mixed by the conventional procedures used in the production of paints, inks or coating compositions. These procedures are so well known to those skilled in the art that they do not require further discussion here.

The crosslinkable polymeric coating compositions are applied to a surface or substrate by conventional means and then thermally cured by heating at a temperature of about 100°C to 375°C, preferably from 125°C to 200°C, for a period of time sufficient to obtian a dry film. Generally, this time will range from about one minute to 2 hours. The components present in a particular crosslinkable polymeric coating composition will determine the temperature and time that will be required to obtain an adequate cure and a good film coating.

The present crosslinkable polymeric compositions can be high solids coating compositions and they can contain as much as 90 weight percent or more solids therein. Generally the total solids content of the coating compositions ranges from about 25 to 90 weight percent, preferably from about 50 to 90 weight percent, of the total weight of the coating composition.

The cured coating compositions were evaluated according to the following procedures:

Forward Impact Resistance: a measure of the ability of a cured film coating to resist rupture from a falling weight. A Gardner Impact Tester Model IG-1120 using a 3.6 kg (eight pound) dart was used to test film coatings cast and cured on steel panels. The dart was raised to a given height in cm (inches) and dropped onto the coated side of the coated steel panel. The cm times kg (inches times pounds), designated cm-kg (inch-pounds), absorbed by the film without rupturing was recorded as the films forward impact resistance.

Pencil Hardness: pencil leads of increasing hardness values were forced against the film coating surface in a precisely defined manner until one pencil lead marred the surface of the film coating. The surface hardness was considered as the hardest pencil grade which just failed to mar the film coating surface. The pencil leads in order of softest to hardest were reported as follows: 6B, 5B, 4B, 3B, 2B, B, HB, F, H, 2H, 3H, 4H, 5H, 6H, 7H, 8H and 9H.

Solvent Resistance: a measure of the resistance of the cured film to attack by methylethyl ketone (MEK) reported as the number of rubs or cycles of methylethyl ketone soaked cheesecloth required to remove one half of a cured film from the test area. The test was performed by stroking the cured film with a methylethyl ketone soaked cheesecloth until that amount of film coating was removed. The number of cycles required to remove this amount of coating was a measure of the coating solvent resistance.

Reverse Impact Resistance: a measure of the ability of a cured film coating to resist rupture from a falling weight. A Gardner Impact Tester Model IG-1120 using a 3.6 kg (eight pound) dart was used to test film coatings cast and cured on steel panels. The dart was raised to a given height in cm (inches) and dropped onto the uncoated side of the coated steel panel. The cm times kg (inches times pounds), designated cm-kg (inch-pounds), absorbed by the film without rupturing was recorded as the films reverse impact resistance.

Crosshatch Adhesion: a lattice pattern with either six or eleven cuts in each direction was made in the coating film to the substrate and pressure-sensitive adhesive tape was applied over the lattice pattern and then removed. The adhesion was evaluated by comparison with descriptions and illustrations as more fully

detailed in ASTM D 3359-78.

Gravelometer: standardized steel shot was projected by means of a controlled air blast at the coated film specimens at a temperature of −10°C. The resultant chipping effect was evaluated by comparison with a set of photographic standards as more fully detailed in ASTM D 3170-74.

Specular Gloss: a measure of the specular gloss of nonmetallic specimens for glossmeter geometries of 60°, 20° and 85° as more fully detailed in ASTM D 523-80.

Distinctness of Image: A set of images reflected from a coated surface are compared with a standard set of images corresponding to a given distinctness of image rating value. Rating values are from 0 to 100 increasing in increments of 10. The instrument used in this test was a DOI 300 manufactured by Mechanical Design and Engineering Company, Burton, Michigan.

The following examples are illustrative of the present invention. As used in the examples appearing hereinafter, the following designations, terms and abbreviations have the indicated meanings:

| | |
|---|---|
| in-lbs | inch-pounds |
| gm | gram |
| mg | milligram |
| °C | Centigrade degree |
| °F | Fahrenheit degree |
| caprolactone | epsilon-caprolactone |
| STY | styrene |
| BA | t-butyl acrylate |
| HEA | 2-hydroxyethyl acrylate |
| AA | acrylic acid |
| HEA.nCL | n-mole caprolactone adduct of HEA |
| CL | caprolactone |
| EA | ethyl acrylate |
| TBA | n-butyl acrylate |
| MMA | methyl methacrylate |
| DA | decyl acrylate |
| CHA | cyclohexyl acrylate |
| HEMA | 2-hydroxyethyl methacrylate |
| HEMA.nCL | n-mole caprolactone adduct of HEMA |
| VCL | vinyl chloride |
| VAc | vinyl acetate |

| | |
|---|---|
| Oligomer I | A caprolactone modified hydroxyethyl acrylate oligomer having an average of two equivalents of caprolactone per equivalent of hydroxyethyl acrylate and prepared in accordance with the procedure described in copending EP—A—108372 filed on an even date herewith. |
| Oligomer II | A caprolactone modified hydroxyethyl acrylate oligomer having an average of four equivalents of hydroxyethyl acrylate and prepared in accordance with the procedure described in copending EP—A—108372 filed on an even date herewith. |
| Oligomer III | A caprolactone modified hydroxyethyl acrylate oligomer having an average of six equivalents of caprolactone per equivalent of hydroxyethyl acrylate and prepared in accordance with the procedure described in copending EP—A—108372 filed on an even date herewith. |
| Oligomer IV | A caprolactone modified hydroxyethyl acrylate oligomer having an average of ten equivalents of caprolactone per equivalent of hydroxyethyl acrylate and prepared in accordance with the procedure described in copending EP—A—108372 filed on an even date herewith. |
| Oligomer V | A caprolactone modified hydroxyethyl methacrylate oligomer having an average of two equivalents of caprolactone per equivalent of hydroxyethyl methacrylate and prepared in accordance with the procedure described in EP—A—108372 filed on an even date herewith. |
| Initiator I | A polymerization initiator commercially available from E. I. du Pont de Nemours and Company as VAZO 52®. |
| Catalyst I | A composition commercially available from American Cyanamid Company as Cycat 4040®. |
| Catalyst II | Stannous octoate. |
| Catalyst III | Dibutyltin dilaurate. |
| Crosslinker I | A methylolated melamine commercially available from American Cyanamid Company as Cymel 303®. |
| Crosslinker II | A multifunctional isocyanate commercially available from Mobay Chemical Company as Desmodur N-75®. |
| Dispersing Aid I | A dispersing aid for grinding pigment commercially available from Tenneco Chemical Company as Neosperse 657®. |

| | |
|---|---|
| Catalyst IV | A composition commercially available from Tenneco Chemical Company as Neosperse 657®. |

Example 1

Part A: Preparation of Monomer Mixture

A monomer mixture was prepared by combining 110.8 grams of Oligomer I with 79.4 grams of styrene, 98.8 grams of n-butyl acrylate and 8.2 grams of acrylic acid. To the monomer mixture was added 6.8 grams of t-dodecylmercaptan, 4 grams of Initiator I dissolved in 30 grams of ethoxyethyl acetate and 65 grams of a mixture of ethoxyethyl acetate/toluene in a 2:1 weight ratio.

Part B: Preparation of Resin Solution

Into a one liter, three-neck reaction flask equipped with a nitrogen inlet and outlet, condenser, thermometer, stirrer and monomer mixture addition tube was added 30 grams of ethoxyethyl acetate which was heated to 115°C. At this temperature, the above monomer mixture was added into the reaction flask through the monomer mixture addition tube over a period of three hours. The addition of the monomer mixture was regulated by means of a mechanical metering pump. After the addition of all the monomer mixture into the reaction flask, the temperature of the contents in the flask was lowered to 80°C and 1.0 grams of Initiator I (post reaction) in 10 grams of ethoxyethyl acetate was added dropwise over a period of 15 minutes. The temperature was maintained at 80°C for one additional hour following the dropwise addition of Initiator I and the resulting resin solution was thereafter removed from the reaction flask. The resin solution containg 61 percent by weight solids and had a hydroxyl number of approximately 117 mg KOH/gm resin.

Part C: Preparation of Cured Coating Composition

A coating composition was prepared containing 162.9 grams of the above resin solution, 46.8 grams of Crosslinker I, 0.83 grams of Catalyst I and 4.95 grams of a n-butanol. The coating composition was mixed until homogeneous and then applied to Bonderite 100® treated steel panels using a drawdown blade with a 0.1 mm (4 mil) wet film clearance. The coating film was air dried for about 20 minutes and then cured by baking for 20 minutes at 150°C. The cured coating film was thereafter cooled to ambient temperature before testing for the specific properties designated in Table I. The results of the testing are given in Table I.

Example 2

The preparation of the monomer mixture in Example 1 was repeated with the exception that the following ingredients were used in the following amounts:

| | |
|---|---|
| Oligomer II | 150.3 grams |
| Hydroxyethyl acrylate | 30.6 grams |
| Styrene | 119.4 grams |
| Butyl acrylate | 148.5 grams |
| Acrylic acid | 12.3 grams |
| t-Dodecylmercaptan | 10.6 grams |
| Initiator I | 6.2 grams in 50 grams 2-heptanone |

This mixture gives an average of two equivalents of caprolactone per equivalent of hydroxyethyl acrylate.

The preparation of the resin solution in Example 1 was repeated with the exception that the 30 grams of ethoxyethyl acetate were replaced with 75 grams of 2-heptanone and the post-reaction initiator used was Initiator I (1.0 gframs in 28.7 grams 2-hepanone). The resulting resin solution contained 67 percent by weight solids and had a hydroxyl number of approximately 88 mg KOH/gm resin.

The preparation of the cured coating composition in Example 1 was also repeated with the exception that the following ingredients were used in the following amounts:

| | |
|---|---|
| Above Resin Solution | 149.7 grams |
| Crosslinker I | 35.2 grams |
| Catalyst I | 0.83 grams |
| n-Butanol | 4.95 grams |

The cured film coating was tested for the specific properties designated in Table I. The results of the testing are given in Table I.

Example 3

The preparation of the monomer mixture in Example 1 was repeated with the exception that the following ingredients were used in the following amounts:

| | |
|---|---|
| Oligomer III | 93.0 grams |
| Hydroxyethyl acrylate | 27.2 grams |
| Styrene | 79.6 grams |
| Butyl acrylate | 99.0 grams |
| Acrylic acid | 8.2 grams |
| t-Dodecylmercaptan | 7.07 grams |
| Initiator I | 4.2 grams in 20 grams 2-heptanone |

This mixture gives an average of two equivalents of caprolactone per equivalent of hydroxyethyl acrylate.

The preparation of the resin solution in Example 1 was repeated with the exception that the 30 grams of ethoxyethyl acetate were replaced with 60 grams 2-heptanone and the post-reaction initiator used was Initiator I (1.0 grams in 22.3 grams 2-heptanone). The resulting resin solution contained 69 percent by weight solids and had a hydroxyl number of approximately 87 mg KOH/gm resin.

The preparation of the cured coating composition in Example 1 was also repeated with the exception that the following ingredients were used in the following amounts:

| | |
|---|---|
| Above Resin Solution | 144.9 grams |
| Crosslinker I | 34.7 grams |
| Catalyst I | 0.83 grams |
| n-Butanol | 4.95 grams |

The cured film coating was tested for the specific properties designated in Table I. The results of the testing are given in Table I.

Example 4

The preparation of the monomer mixture in Example 1 was repeated with the exception that the following ingredients were used in the following amounts:

| | |
|---|---|
| Oligomer IV | 88.0 grams |
| Hydroxyethyl acrylate | 32.6 grams |
| Styrene | 79.6 grams |
| Butyl acrylate | 99.0 grams |
| Acrylic acid | 8.2 grams |
| t-Dodecylmercaptan | 7.07 grams |
| Initiator I | 4.2 grams in 20 grams 2-heptanone |

This mixture gives an average of two equivalents of caprolactone per equivalent of hydroxyethyl acrylate.

The preparation of the resin solution in Example 1 was repeated with the exception that the 30 grams of ethoxyethyl acetate were replaced with 60 grams of 2-heptanone and the post-reaction initiator was Initiator I (1.0 grams in 22.3 grams 2-heptanone). The resulting resin solution contained 69 percent by weight solids and had a hydroxyl number of approximately 87 mg KOH/gm resin.

The preparation of the cured coating composition in Example 1 was also repeated with the exception that the following ingredients were used in the following amounts:

| | |
|---|---|
| Above Resin Solution | 144.9 grams |
| Crosslinker I | 34.7 grams |
| Catalyst I | 0.83 grams |
| n-Butanol | 4.95 grams |

The cured film coating was tested for the specific properties designated in Table I. The results of the testing are given in Table I.

Comparative Example A

Part A: Preparation of Monomer Mixture

A monomer mixture was prepared by combining 81.2 grams of hydroxyethyl acrylate with 158.8 grams of styrene, 197.6 grams of n-butyl acrylate and 16.4 grams of acrylic acid. To the monomer mixture was added 13.6 grams of t-dodecylmercaptan and 7.95 grams of Initiator I in 50 grams of 2-heptanone.

Part B: Preparation of Unmodified Resin Solution

Into a one liter, three-neck reaction flask equipped with a nitrogen inlet and outlet, condenser, thermometer, stirrer and monomer mixture addition tube was added 50 grams of 2-heptanone which was heated to 115°C. At this temperature, the above monomer mixture was added into the reaction flask through the monomer mixture addition tube over a period of three hours. The addition of the monomer mixture was regulated by means of a mechanical metering pump. After the addition of all the monomer mixture into the reaction flask, the temperature of the contents in the flask was lowered to 80°C and 1.0 grams of Initiator I (post reaction) in 23.5 grams of 2-heptanone was added dropwise over a period of 15 minutes. The temperature was maintained at 80°C for one additional hour following the dropwise addition of Initiator I and the resulting unmodified resin solution was thereafter removed from the reaction flask. The resin solution contained 75 percent by weight solids.

Part C: Preparation of Cured Coating Composition

A coating composition was prepared containing 133.0 grams of the above resin soltuion, 40.7 grams of Crosslinker I, 0.83 grams of Catalyst I and 4.95 grams of n-butanol. The coating composition was mixed until homogeneous and then applied to Bonderite 100® treated steel panels using a drawdown blade with a 0.1 mm (4 mil) wet film clearance. The coating film was air dried for about 20 minutes and then cured by baking for 20 minutes at 150°C. The cured coating film was thereafter cooled to ambient temperature before testing for the specific properties designated in Table I. The results of the testing are given in Table I.

Comparative Example B

Part A: Preparation of Monomer Mixture and Unmodified Resin Solution

The preparation of the monomer mixture and unmodified resin solution in comparative Example A was repeated and the resulting unmodified resin solution was retained in the reaction flask.

Part B: Preparation of Caprolactone Grafted Resin Solution

Into the reaction flask containing 533 grams of the above unmodified resin solution was added 140 grams of caprolactone and 0.006 grams of Catalyst II. The maount of caprolactone was equivalent to the amount of caprolactone used in Example 1, i.e., two equivalents of caprolactone per equivalent of hydroxyethyl acrylate. The contents of the flask were heated to 140°C and maintained at this temperature for a period of three hours. The grafting reaction of the caprolactone onto the above unmodified resin was monitored throughout this period by gas chromatography. The resulting caprolactone modified resin solution was thereafter removed from the reaction flask. The resin solution contained 82 percent by weight solids.

Part C: Preparation of Cured Coating Composition

A coating composition was prepared containing 123.0 grams of the above resin solution, 33.0 grams of Crosslinker I, 0.83 grams of Catalyst I, 4.95 grams of n-butanol and 4.75 grams of 2-heptanone. The coating composition was mixed until homogeneous and then applied to Bonderite 100® treated steel panels using a drawdown blade with a 0.1 mm (4 mil) wet film clearance. The coating film was air dried for about 20 mintutes and then cured by baking for 20 minutes at 150°C. The cured coating film was thereafter cooled to ambient temperature before testing for the specific properties designated in Table I. The results of the testing are given in Table I.

Comparative Example C

The preparation of the monomer mixture, unmodified resin solution, caprolactone grafted resin solution and the cured coating composition in Comparative Example B was repeated with the exception that 175 grams of caprolactone was used instead of 140 grams of caprolactone as used in Comparative Example B, i.e., 2.5 equivalents of caprolactone per equivalent of hydroxyethyl acrylate were used instead of 2.0 equivalents of caprolactone per equivalent of hydroxyethyl acrylate. The resulting cured coating film was tested for the specific properties designated in Table I. The results of the testing are given in Table I.

TABLE I

Comparison of methods for introducing caprolactone into polymers and their resulting coating properties

| Example | Polymer Composition Monomer (Mole Fraction) | Caprolactone Content* | Forward Impact cm-kg (in.-lbs.) | Pencil Hardness |
|---|---|---|---|---|
| 1 | STY/BA/HEA.2CL/AA (0.387/0.392/0.164/0.058) | 2.0 | 115 (100) | F |
| 2 | STY/BA/HEA/HEA.4CL/AA (0.382/0.386/0.0875/0.0875/0.057) | 2.0 | 115 (100) | F |
| 3 | STY/BA/HEA/HEA.6CL/AA (0.382/0.386/0.117/0.058/0.057) | 2.0 | 92 (80) | HB |
| 4 | STY/BA/HEA/HFA.10CL/AA (0.382/0.386/0.140/0.035/0.057) | 2.0 | 69 (60) | F |
| A | STY/BA/HEA/AA (0.382/0.386/0.175/0.057) | 0.0 | 11.5 (10) | F |
| B | Resin of Comparative Example A grafted with caprolactone. | 2.0 | 46 (40) | HB |
| C | Resin of Comparative Example A grafted with caprolactone. | 2.5 | 115 (100) | HB |

*Caprolactone content reported in moles of caprolactone per equivalent of hydroxyl in polymer.

Table I shows the properties obtained when caprolactone is added to a polymer by grafting (comparative examples B and C) and by addition polymerization of caprolactone modified oligomers having ethylenic unsaturation (examples 1 through 4). At equivalent caprolactone content, the forward impact for the polymer compositions of Examples 1 through 4 is significantly higher than the forward impact of comparative Example B and also comparative Example A which was not modified with caprolactone. Pencil hardness is generally higher for the polymer compositions of Examples 1 through 4 in comparison with comparative Example B at equivalent caprolactone content.

In addition to the specific properties tested for in Table I, all of the final coatings prepared from the polymers in Examples 1 through 4 and comparative Examples A through C exhibited excellent crosshatch adhesion and resistance to methyl-ethyl ketone (2-butanone). The coating of Example 1 was further tested for potential chipping resistance by a gravelometer at −23°C (−10°F) to give the following results:

| Coating Identification | Dry Coating Thickness | Gravelometer Rating |
|---|---|---|
| Example 1 | 0.064 mm (2.5 mil) | 5A, 6A |
| Example 2 | 0.13 mm (5.0 mil) | 6A, 7B |

The results show excellent chipping resistance for the coating of Example 1.

Example 5

The preparation of the monomer mixture in Example 1 was repeated with the exception that the following ingredients were used in the following amounts:

| | |
|---|---|
| Oligomer I | 75.0 grams |
| Styrene | 26.1 grams |
| t-Butyl acrylate | 46.6 grams |
| n-Butyl acrylate | 44.5 grams |
| Acrylic acid | 5.1 grams |
| t-Dodecylmercaptan | 4.4 grams |
| Initiator I | 2.6 grams in 21 grams of 2-heptanone |
| Ethoxyethyl Acetate | 44.0 grams |
| Toluene (2:1 weight ratio) | |

The preparation of the resin solution in Example 1 was repeated with the exception that the 30 grams of ethoxyethyl acetate were replaced with 50 grams of 2-heptanone and the post reaction initiator used was Initiator I (0.42 grams in 21 grams of 2-heptanone). The resulting resin solution contained 59 percent by weight solids and had a hydroxyl number of approximately 122 mg KOH/gm resin.

The preparation of the cured coating composition in Example 1 was also repeated with the exception that the following ingredients were used in the following amounts:

| | |
|---|---|
| Above Resin Solution | 167.0 grams |
| Crosslinker I | 48.8 grams |
| Catalyst I | 0.83 grams |
| n-Butanol | 4.95 grams |

The cured film coating was tested for the specific properties designated in Table II. The results of the testing are given in Table II.

Example 6

The preparation of the monomer mixture in Example 1 was repeated with the exception that the following ingredients were used in the following amounts:

| | |
|---|---|
| Oligomer I | 60.3 grams |
| Styrene | 20.8 grams |
| t-Butyl acrylate | 21.4 grams |
| Ethyl acrylate | 40.1 grams |
| Acrylic acid | 4.1 grams |
| t-Dodecylmercaptan | 3.53 grams |
| Initiator I | 2.07 grams in 10 grams of 2-heptanone |

The preparation of the resin solution in Example 1 was repeated with the exception that the 30 grams of ethoxyethyl acetate were replaced with 30 grams of 2-heptanone and the post reaction initiator was Initiator I (0.5 grams in 8.7 grams of 2-heptanone). The resulting resin solution contained 69.7 percent by weight solids and had a hydroxyl number of approximately 87 mg KOH/gm resin.

The preparation of the cured coating composition in Example 1 was also repeated with the exception that the following ingredients were used in the following amounts:

| | |
|---|---|
| Above Resin Solution | 143.5 grams |
| Crosslinker I | 34.7 grams |
| Catalyst I | 0.83 grams |
| n-Butanol | 4.95 grams |

The cured film coating was tested for the specific properties designated in Table II. The results of the testing are given in Table II.

Example 7

The preparation of the monomer mixture in Example 1 was repeated with the exception that the following ingredients were used in the following amounts:.

| | |
|---|---|
| Oligomer I | 75.5 grams |
| Methyl Methacrylate | 26.1 grams |
| t-Butyl acrylate | 46.6 grams |
| n-Butyl acrylate | 44.5 grams |
| Acrylic acid | 5.1 grams |
| t-Dodecylmercaptan | 4.4 grams |
| Initiator I | 2.6 grams in 20 grams of 2-heptanone |

The preparation of the resin solution in Example 1 was repeated with the exception that the 30 grams of ethoxyethyl acetate were replaced with 36 grams of 2-heptanone and the post reaction initiator was Initiator I (0.5 grams in 10 grams of 2-heptanone). The resulting resin solution contained 73 percent by weight solids and had a hydroxyl number of approximately 97 mg/KOH/gm resin.

The preparation of the cured coating composition in Example 1 was also repeated with the exception that the following ingredients were used in the following amounts:

| | |
|---|---|
| Above Resin Solution | 137.0 grams |
| Crosslinker I | 38.8 grams |
| Catalyst I | 0.83 grams |
| n-Butanol | 4.95 grams |

The cured film coating was tested for the specific properties designated in Table II. The results of the testing are given in Table II.

Example 8

The preparation of the monomer mixture in Example 1 was repeated with the exception that the following ingredients were used in the following amounts:

| | |
|---|---|
| Oligomer I | 60.2 grams |
| t-Butyl acrylate | 67.9 grams |
| Ethyl acrylate | 23.8 grams |
| Acrylic acid | 4.1 grams |
| t-Dodecylmercaptan | 3.5 grams |
| Initiator I | 2.05 grams in 11.3 grams of 2-heptanone |

The preparation of the resin solution in Example 1 was repeated with the exception that the 30 grams of ethoxyethyl acetate were replaced with 30 grams of 2-heptanone and the post reaction initiator with Initiator I (0.5 grams in 10 grams of 2-heptanone). The resulting resin solution contained 72 percent by weight solids and had a hydroxyl number of approximately 76 mg KOH/gm resin.

The preparation of the cured coating composition in Example 1 was also repeated with the exception that the following ingredients were used in the following amounts:

| | |
|---|---|
| Above Resin Solution | 138.9 grams |
| Crosslinker I | 30.4 grams |
| Catalyst I | 0.83 grams |
| n-Butanol | 4.95 grams |

The cured film coating was tested for the specific properties designated in Table II. The results of the testing are given in Table II.

Example 9

The preparation of the monomer mixture in Example 1 was repeated with the exception that the following ingredients were used in the following amounts:

| | |
|---|---|
| Oligomer I | 75.0 grams |
| Styrene | 26.1 grams |
| t-Butyl acrylate | 46.6 grams |
| Decyl acrylate | 73.7 grams |
| Acrylic acid | 5.1 grams |
| t-Dodecylmercaptan | 2.2 grams |
| Initiator I | 2.6 grams in 20 grams of 2-heptanone |

The preparation of the resin solution in Example 1 was repeated with the exception that the 30 grams of ethoxyethyl acetate were replaced with 36 grams of 2-heptanone and the post reaction initiator was Initiator I (0.5 grams in 10 grams of 2-heptanone). The resulting resin solution contained 68 percent by weight solids and had a hydroxyl number of approximately 90 mg KOH/gm resin.

The preparation of the cured coating composition in Example 1 was also repeated with the exception that the following ingredients were used in the following amounts:

| | |
|---|---|
| Above Resin Solution | 147.1 grams |
| Crosslinker I | 36.0 grams |
| Catalyst I | 0.83 grams |
| n-Butanol | 4.95 grams |

The cured film coating was tested for the specific properties designated in Table II. The results of the testing are given in Table II.

Example 10

The preparation of the monomer mixture in Example 1 was repeated with the exception that the following ingredients were used in the following amounts:

| | |
|---|---|
| Oligomer I | 60.2 grams |
| Styrene | 20.8 grams |
| Cyclohexyl acrylate | 58.4 grams |
| n-Butyl acrylate | 24.2 grams |
| Acrylic acid | 4.1 grams |
| t-Dodecylmercaptan | 3.53 grams |
| Initiator I | 2.07 grams in 10 grams of 2-heptanone |

The preparation of the resin solution in Example 1 was repeated with the exception that the 30 grams of ethoxyethyl acetate were replaced with 36 grams of 2-heptanone and the post reaction initiator was Initiator I (0.5 grams in 10 grams of 2-heptanone). The resulting resin solution contained 69 percent by weight solids and had a hydroxyl number of approximately 84 mg KOH/gm resin.

The preparation of the cured coating composition in Example 1 was also repeated with the exception that the following ingredients were used in the following amounts:

| | |
|---|---|
| Above Resin Solution | 144.7 grams |
| Crosslinker I | 33.6 grams |
| Catalyst I | 0.83 grams |
| n-Butanol | 4.95 grams |

The cured film coating was tested for the specific properties designated in Table II. The results of the testing are given in Table II.

Example 11

The preparation of the monomer mixture in Example 1 was repeated with the exception that the following ingredients were used in the following amounts:

| | |
|---|---|
| Oligomer V | 115.3 grams |
| Styrene | 79.4 grams |
| n-Butyl acrylate | 98.8 grams |
| Acrylic acid | 8.2 grams |
| t-Dodecylmercaptan | 6.8 grams |
| Initiator I | 4.0 grams in 30 grams of ethoxy ethyl acetate |
| Ethoxyethyl Acetate/Toluene (2:1 weight ratio) | 67.7 grams |

The preparation of the resin solution in Example 1 was repeated. The resulting resin solution contained 63 percent by weight solids and had a hydroxyl number of approximately 79 mg KOH/gm resin.

The preparation of the cured coating composition in Example 1 was also repeated with the exception that the following ingredients were used in the following amounts:

| | |
|---|---|
| Above Resin Solution | 80.0 grams |
| Crosslinker I | 15.8 grams |
| Catalyst I | 0.44 grams |
| n-Butanol | 2.5 grams |

The cured film coating was tested for the specific properties designated in Table II. The results of the testing are given in Table II.

Example 12

The preparation of the monomer mixture in Example 1 was repeated with the exception that the following ingredients were used in the following amounts:

| | |
|---|---|
| Oligomer V | 75.5 grams |
| Styrene | 26.1 grams |
| t-Butyl acrylate | 46.6 grams |
| n-Butyl acrylate | 44.5 grams |

| | |
|---|---|
| Acrylic acid | 5.1 grams |
| t-Dodecylmercaptan | 4.4 grams |
| Initiator I | 2.6 grams in 21 grams of 2-heptanone |
| Ethoxyethyl Acetate/Toluene (2:1 weight ratio) | 43.6 grams |

The preparation of the resin solution in Example 1 was repeated with the exception that the 30 grams of ethoxyethyl acetate were replaced with 50 grams of 2-heptanone and the post reaction initiator was Initiator I (0.42 grams in 21 grams of 2-heptanone). The resulting resin solution contained 53 percent by weight solids and had a hydroxyl number of approximately 83 mg KOH/gm resin. This material was vacuum stripped to 75 percent by weight solids.

The preparation of the cured coating composition in Example 1 was also repeated with the exception that the following ingredients were used in the following amounts:

| | |
|---|---|
| Above Resin Solution | 133.3 grams |
| Crosslinker I | 32.2 grams |
| Catalyst I | 0.83 grams |
| n-Butanol | 4.95 grams |

The cured film coating was tested for the specific properties designated in Table II. The results of the testing are given in Table II.

TABLE II
Polymers prepared with Oligomer I and Oligomer V and their resulting coating properties

| Example | Polymer Composition Monomer (Mole Fraction) | Caprolactone Content* | Forward Impact cm-kg (in.-lbs.) | Pencil Hardness |
|---|---|---|---|---|
| 5 | STY/TBA/BA/HEA.2CL/AA (0.201/0.291/0.277/0.174/0.057) | 2.0 | 80.5 (70) | F |
| 6 | STY/TBA/EA/HEA.2CL/AA (0.200/0.167/0.401/0.175/0.057) | 2.0 | 80.5 (70) | F |
| 7 | MMA/TBA/BA/HEA.2CL/AA (0.207/0.288/0.275/0.174/0.057) | 2.0 | 80.5 (70) | F |
| 8 | TBA/EA/HEA.2CL/AA (0.530/0.238/0.175/0.057) | 2.0 | 92 (80) | F |
| 9 | STY/TBA/DA/HEA.2CL/AA (0.201/0.291/0.277/0.174/0.057) | 2.0 | 103.5 (90) | F |
| 10 | STY/CHA/BA/HEA.2CL/AA (0.200/0.379/0.189/0.175/0.057) | 2.0 | 80.5 (70) | H |
| 11 | STY/BA/HEMA.2CL/AA (0.387/0.392/0.164/0.058) | 2.0 | 92 (80) | F |
| 12 | STY/TBA/BA/HEMA.2CL/AA (0.202/0.293/0.279/0.170/0.057) | 2.0 | 34.5 (30) | F |

*Caprolactone content reported in moles of caprolactone per equivalent of hydroxyl in polymer

Table II shows the properties obtained when caprolactone is added to a polymer by addition polymerization of Oligomer I or Oligomer V with other ethylenically unsaturated monomers. The final coatings prepared from the polymers in Examples 5 through 12 generally exhibit good or excellent forward impact and pencil hardness.

In addition to the specific properties tested for in Table II, all of the final coatings prepared from the polymers in Examples 5 through 12 exhibited excellent crosshatch adhesion and resistance to methylethyl

ketone (2-butanone). The coating of Example 5 was further tested for potential chipping resistance by a gravelometer to give the following results:

| Coating Identification | Dry Coating Thickness | Gravelometer Rating |
|---|---|---|
| Example 5 | 0.063 mm (2.5 mil) | 5A, 5B |

The results show excellent chipping resistance for the coating of Example 5.

Example 13

Part A: Preparation of Monomer Mixture and Resin Solution

A monomer mixture was prepared in a stainless steel high pressure container cooled to −78°C by combining 55.4 grams of Oligomer I with 2.2 grams of vinyl acetate. To the monomer mixture was added 1.4 grams of t-dodecylmercaptan, 0.7 grams of Initiator I and 24.2 grams of 2-butanone. Into a separate reaction flask also cooled to −78°C was added 51.0 grams of vinyl chloride and 101 grams of 2-butanone. The contents of the reaction flask were added into the stainless steel high pressure container which was then sealed and placed in a heating bath at 50°C for a period of 24 hours. After the 24 hour period, the stainless steel high pressure container was cooled to ambient temperature, opened and the contents were removed with the aid of additional 2-butanone. The resulting resin solution was vacuum stripped to give a resin solution containing 62 percent by weight solids.

Part B: Preparation of Cured Coating Composition

A coating composition was prepared containing 40.3 grams of the above resin solution, 8.3 grams of Crosslinker I, 0.21 grams of Catalyst I and 1.24 grams of n-butanol. The coating composition was mixed until homogeneous and then applied to Bonderite 100[R] treated steel panels using a drawdown blade with a 0.1 mm (4 mil) wet film clearance. The coating film was air dried for about 20 minutes and then cured by baking for 15 minutes at 125°C. The cured coating film was thereafter cooled to ambient temperature before testing for the specific properties designated in Table III. The results of the testing are given in Table III.

Example 14

The preparation of the monomer mixture and resin solution in Example 13 was repeated with the exception that the following ingredients were used in the following amounts:

| | |
|---|---|
| Oligomer III | 43.2 grams |
| Vinyl Acetate | 2.2 grams |
| Vinyl Chloride | 51.0 grams |
| Hydroxyethyl Acrylate | 12.4 grams |
| Initiator I | 0.7 grams |
| t-Dodecylmercaptan | 1.4 grams |
| 2-Butanone | 125.0 grams |

The resulting resin solution contained 68 percent by weight solids after vacuum stripping.

The preparation of the cured coating composition in Example 13 was also repeated with the exception that the following ingredients were used in the following amounts:

| | |
|---|---|
| Above Resin Solution | 36.8 grams |
| Crosslinker I | 8.3 grams |
| Catalyst I | 0.21 grams |
| n-Butanol | 1.2 grams |

The cured film coating was tested for the specific properties designated in Table III. The results of the testing are given in Table III.

Example 15

The preparation of the monomer mixture and resin solution in Example 13 was repeated with the exception that the following ingredients were used in the following amounts:

| | |
|---|---|
| Oligomer IV | 60.0 grams |
| Vinyl Acetate | 2.5 grams |
| Vinyl Chloride | 60.0 grams |
| Initiator I | 0.8 grams |
| t-Dodecylmercaptan | 1.5 grams |
| 2-Butanone | 181.0 grams |

The resulting resin solution contained 82 percent by weight solids after vacuum stripping.

The preparation of the cured coating composition in Example 13 was also repeated with the exception that the following ingredients were used in the following amounts:

| | |
|---|---|
| Above Resin Solution | 30.8 grams |
| Crosslinker I | 2.2 grams |
| Catalyst I | 0.21 grams |
| n-Butanol | 1.2 grams |

The cured film coating was tested for the specific properties designated in Table III. The results of the testing are given in Table III.

Example 16

The preparation of the monomer mixture and resin solution in Example 13 was repeated with the exception that the following ingredients were used in the following amounts:

| | |
|---|---|
| Oligomer I | 13.0 grams |
| Vinyl Acetate | 2.0 grams |
| Vinyl Chloride | 85.0 grams |
| Initiator I | 1.0 grams |
| t-Dodecylmercaptan | 1.4 grams |
| 2-Butanone | 93.0 grams |

The resulting resin solution contained 47 percent by weight solids.

The preparation of the cured coating composition in Example 13 was also repeated with the exception that the following ingredients were used in the following amounts:

| | |
|---|---|
| Above Resin Solution | 41.0 grams |
| Crosslinker I | 1.5 grams |
| Catalyst I | 0.14 grams |
| n-Butanol | 0.8 grams |

Also, the coating composition was applied to Bonderite $100^R$ treated steel panels using a drawdown blade with a 0.25 mm (10 mil) wet film clearance. The coating film was air dried for 15 minutes and then cured by baking for 15 minutes at 125°C. The cured film coating was thereafter cooled to ambient temperature and tested for the specific properties designated in Table III. The results of the testing are given in Table III.

Example 17

The preparation of the monomer mixture and resin solution in Example 13 was repeated with the exception that the following ingredients were used in the following amounts:

| | |
|---|---|
| Oligomer IV | 13.0 grams |
| Vinyl Acetate | 2.0 grams |
| Vinyl Chloride | 110.0 grams |
| Hydroxyethyl Acrylate | 12.4 grams |
| Initiator I | 1.5 grams |
| t-Dodecylmercaptan | 1.5 grams |
| Ethoxyethyl Acetate | 92.6 grams |

The resulting resin solution contained 35 percent by weight solids.

A pigment grind was then prepared by grinding in a sand mill to a Hegeman fineness of 7 the following: 51.0 grams of titanium dioxide (rutile); 182 grams of the above resin solution; 0.5 grams of Dispersing Aid I; and 58 grams of 2-butanone. To a 10 gram sample of this resinous pigment grind was added 0.868 grams of Crosslinker II and one drop of Catalyst III. The coating composition was mixed until homogeneous and then applied to Bonderite $100^R$ treated steel panels using a drawdown blade with a 0.15 mm (6 mil) wet film clearance. The coating film was allowed to cure for three days at ambient temperature before testing for the specific properties designated in Table III. The results of the testing are given in Table III.

Comparative Example D

The preparation of the monomer mixture and resin solution in Example 13 was repeated with the exception that the following ingredients were used in the following amounts:

Stainless Steel High Pressure Container

| | |
|---|---|
| Hydroxyethyl Acrylate | 29.0 grams |
| Vinyl Acetate | 3.5 grams |
| Initiator I | 1.0 grams |
| 2-Butanone | 8.05 grams |

Reaction Flask

| | |
|---|---|
| Vinyl Chloride | 79.0 grams |
| 2-Butanone | 101.0 grams |

The resulting resin solution contained 46 percent by weight solids.

The preparation of the cured coating composition in Example 13 was also repeated with the exception that the following ingredients were used in the following amounts:

| | |
|---|---|
| Above Resin Solution | 54.4 grams |
| Crosslinker I | 12.7 grams |
| Catalyst I | 0.21 grams |
| n-Butanol | 1.25 grams |

Also, the coating film was air dried for about 20 minutes and then cured by baking for 10 minutes at 125°C. The cured coating film was thereafter cooled to ambient temperature before testing for the specific properties designated in Table III. The results of the testing are given in Table III.

TABLE III

Polymers prepared with Vinyl Chloride and Caprolactone Modified Hydroxyethyl Acrylate

| Example | Polymer Composition Monomer (Mole Fraction) | Caprolactone Content* | Forward Impact cm-kg (in.-lbs.) | Pencil Hardness |
|---|---|---|---|---|
| 13 | VCl/HEA.2CL/VAc (0.813/0.160/0.026) | 2.0 | 80.5 (70) | F |
| 14 | VCl/HEA.6CL/HEA/VAc (0.814/0.106/0.054/0.026) | 2.0 | 52 (45) | F |
| 15 | VCl/HEA.10CL/VAc (0.926/0.046/0.028) | 10.0 | 184 (160) | 4B |
| 16 | VCl/HEA.2CL/VAc (0.957/0.027/0.016) | 2.0 | 184 (160) | 3H |
| 17 | VCl/HEA.2CL/VAc (0.967/0.021/0.013) | 2.0 | 161 (140) | H |
| D | VCl/HEA/VAc (0.813/0.161/0.026) | 0 | <11.5 (<10) | 2H |

*Caprolactone content reported in moles of caprolactone per equivalent of hydroxyl in polymer.

Table III shows the properties obtained when caprolactone is added to a polymer by addition polymerization of either Oligomer I, Oligomer III or Oligomer IV with vinyl chloride and other ethylenically unsaturated monomers. The forward impact for the polymer compositions of Examples 13 through 17 is significantly higher than the forward impact of comparative Example D which was not modified with caprolactone. In addition to the specific properties tested for in Table III, all of the final coatings prepared from the polymers in Examples 13 through 17 and comparative Example D exhibited excellent crosshatch adhesion and resistance to methylethyl ketone (2-butanone).

Example 18

A pigment grind was prepared by grinding in a sand mill to a Hegeman fineness of 7 the following: 202.13 grams of titanium dioxide (rutile); 250 grams of the resin solution prepared in Example 1; 15.74 grams of ethoxyethyl acetate and 9.19 grams of 2-heptanone. To this resinous pigment grind was added 78.64 grams of Crosslinker I, 2.55 grams of Catalyst IV, 11.6 grams of ethoxyethyl acetate, 65.9 grams of 2-heptanone and 57.85 grams of n-butanol. The resulting white coating composition had a viscosity of 31 seconds using a No. 4 Ford cup. The coating composition was mixed until homogeneous and then applied to Bonderite $100^R$ treated steel panels using a drawdown blade with a 0.1 mm (4 mil) wet film clearance. The coating film was air dried for 15 minutes and then cured by baking for 30 minutes at 121°C (250°F). The cured coating film was thereafter cooled to ambient temperature before testing for the specific properties designated below. The results of the testing are also given below.

| | |
|---|---|
| Forward Impact | 161 cm-kg (140 in-lbs.) |
| Reverse Impact | 92 cm-kg (80 in-lbs.) |
| Pencil Hardness | H |
| Gloss at 60°C | 90 |
| at 20°C | 65 |
| Distinctness of Image | 70 |
| Gravelometer at −23°C (−10°F) | 6A |

The results show good or excellent coating properties for the pigmented coating composition utilizing the resin solution prepared in Example 1.

**Claims**

1. A process for preparing a polymeric composition comprising polymerizing one or more ethylenically unsaturated monomers with a composition comprising:

(a) 0 to 10 weight percent of a lactone,

(b) greater than 0 to about 20 weight percent of hydroxyalkyl acrylate or methacrylate,

(c) 2 or less weight percent of diacrylates,

(d) 10 or less weight percent of products resulting from Michael addition, acrylic polymerization, transesterification reactions, or other side reactions,

(e) remainder to 100 weight percent of a reactive monomer of the following formula:

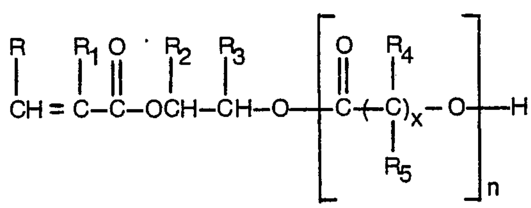

wherein R, $R_1$, $R_2$, and $R_3$ are independently hydrogen or methyl, $R_4$ and $R_5$ are independently hydrogen or alkyl of from 1 to 12 carbon atoms, x is from 4 to 7, and both n and the average value of n in the composition are equal to or greater than 1, and

(f) less than about 100 parts per million of catalyst.

2. A process for preparing a crosslinked polymeric composition comprising:

(1) polymerizing one or more ethylenically unsaturated monomers with a composition comprising:

(a) 0 to 10 weight percent of a lactone,

(b) greater than 0 to about 20 weight percent of hydroxyalkyl acrylate or methacrylate,

(c) 2 or less weight percent of diacrylates,

(d) 10 or less wieght percent of products resulting from Michael addition, acrylic polymerization, transesterification reactions, or other side reactions,

(e) remainder to 100 weight percent of a reactive monomer of the following formula:

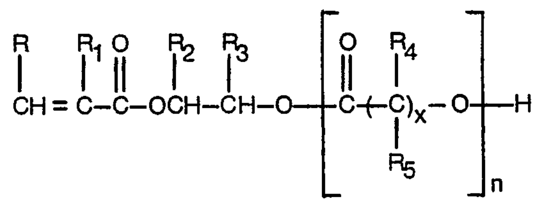

wherein R, $R_1$, $R_2$, and $R_3$ are independently hydrogen or methyl, $R_4$ and $R_5$ are independently hydrogen or alkyl of from 1 to 12 carbon atoms, x is from 4 to 7, and both n and the average value of n in the composition are equal to or greater than 1, and

(f) less than about 100 parts per million of catalyst; and

(2) crosslinking the polymeric composition of (1) with an isocyanate resin or an amino resin selected from the group consisting of melamine formaldehydes, urea formaldehydes and benzoguanamine formaldehydes.

3. A process as claimed in claim 1 or 2 wherein the one or more ethylenically unsaturated monomers are selected from the group consisting of styrene, n-butyl acrylate, 2-hydroxyethyl acrylate, acrylic acid, ethyl acrylate, t-butyl acrylate, methyl methacrylate, decyl acrylate, cyclohexyl acrylate, 2-hydroxyethyl methacrylate, vinyl chloride and vinyl acetate.

4. A process as claimed in any of the claims 1 to 3 wherein the lactone in (a) is present in a concentration of from 0 to 5 weight percent.

5. A process as claimed in any of the claims 1 to 4 wherein the hydroxyalkyl acrylate or methacrylate in (b) is present in a concentration of less than 10 weight percent.

6. A process as claimed in any of the claims 1 to 5 wherein the diacrylates in (c) are present in a concentration of 1 or less weight percent.

7. A process as claimed in any of the claims 1 to 6 wherein the products resulting from Michael addition, acrylic polymerization, transesterification reactions or other side reactions in (d) are present in a concentration of 5 or less weight percent.

8. A process as claimed in any of the claims 1 to 7 wherein, in the reactive monomer of (e), R, $R_1$, $R_2$, $R_3$, $R_4$ and $R_5$ are hydrogen, x is five and the average value of n is two.

9. A process as claimed in any of claims 1 and 3 to 8 wherein the one or more ethylenically unsaturated monomers are present at a concentration of from about 5 to about 90 weight percent and the composition comprising (a) through (f) is present at a concentration of from about 90 to about 5 weight percent.

10. A process as claimed in any of the claims 2 to 8 wherein the one or more ethylenically unsaturated monomers are present at a concentration of from about 5 to about 90 weight percent, the composition comprising (a) through (f) is present at a concentration of from about 90 to about 5 weight percent and the isocyanate resin or amino resin is present at a concentration of from about 5 to about 50 weight percent.

11. A process as claimed in any of the claims 1 to 10 wherein the one or more ethylenically unsaturated monomers are selected from the group consisting of styrene, n-butyl acrylate, 2-hydroxyethyl acrylate, methyl methacrylate, decyl acrylate, cyclohexyl acrylate, 2-hydroxyethyl acrylate, vinyl chloride and vinyl acetate.

**Patentansprüche**

1. Verfahren zur Herstellung einer polymeren Zusammensetzung, umfassend die Polymerisation eines oder mehrerer ethylenisch ungesättigter Monomerer mit einer Zusammensetzung, die umfaßt:

(a) 0 bis 10 Gewichtsprozent eines Lactons,

(b) mehr als 0 bis ungefähr 20 Gewichtsprozent Hydroxyalkylacrylat oder -methyacrylat,

(c) 2 oder weniger Gewichtsprozent Diacrylate,

(d) 10 oder weniger Gewichtsprozent an Produkten, die von Michael-Addition, acrylischer Polymerisation, Umesterungsreaktionen oder anderen Nebenreaktionen herrühren,

(e) Rest auf 100 Gewichtsprozent eines reaktiven Monomeren der folgenden Formel

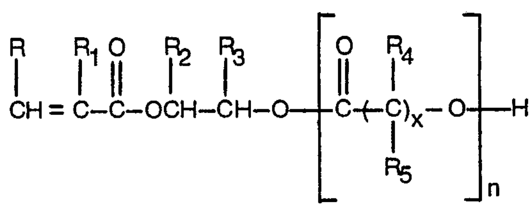

in welcher R, $R_1$, $R_2$ und $R_3$ unabhängig voneinander Wasserstoff oder Methyl bedeuten, $R_4$ und $R_5$ unabhängig voneinander für Wasserstoff oder Alkyl mit 1 bis 12 Kohlenstoffatomen stehen, x 4 bis 7 beträgt, und sowohl n als auch der Durchschnittswert von n in der Zusammensetzung gleich oder größer als 1 ist, und

(f) weniger als ungefähr 100 ppm Katalysator.

2. Verfahren zur Herstellung einer vernetzten polymeren Zusammensetzung, welches umfaßt:

(1) die Polymerisation eines oder mehrerer ethylenisch ungesättigter Monomerer mit einer Zusammensetzung, die umfaßt:

(a) 0 bis 10 Gewichtsprozent eines Lactons,

(b) mehr als 0 bis ungefähr 20 Gewichtsprozent Hydroxyalkylacrylat oder -methacrylat,

(c) 2 oder weniger Gewichtsprozent Diacrylate,

(d) 10 oder weniger Gewichtsprozent an Produkten, die von Michael-Addition, acrylischer Polymerisation, Umesterungsreaktionen oder anderen Nebenreaktionen herrühren,

(e) Rest auf 100 Gewichtsprozent eines reaktiven Monomeren der folgenden Formel

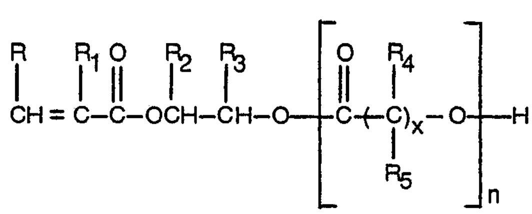

in welcher R, $R_1$, $R_2$ und $R_3$ unabhängig voneinander Wasserstoff oder Methyl beudeuten, $R_4$ und $R_5$ unabhängig voneinander für Wasserstoff oder Alkyl mit 1 bis 12 Kohlenstoffatomen stehen, x 4 bis 7 beträgt, und sowohl n als auch der Durchschnittswert von n in der Zusammensetzung gleich oder größer als 1 ist, und

(f) weniger als ungefähr 100 ppm Katalysator; und

(2) die Vernetzung der polymeren Zusammensetzung von (1) mit einem Isocyanatharz oder einem Aminoharz, das augewählt ist aus der Gruppe, die aus Melamin-Formaldehyden, Harnstoff-Formaldehyden und Benzoguanamin-Formaldehyden besteht.

3. Verfahren nach Anspruch 1 oder 2, in welchem das eine oder die mehreren ethylenisch ungesättigten Monomeren ausgewählt sind aus der Gruppe, die aus Styrol, n-Butylacrylat, 2-Hydroxyethylacrylat, Acrylsäure, Etylacrylat, t-Butylacrylat, Methylmethacrylat, Decylacrylat, Cyclohexylacrylat, 2-Hydroxyethylmethacrylat, Vinylchlorid und Vinylacetat besteht.

4. Verfahren nach irgendeinem der Ansprüche 1 bis 3, in welchem das Lacton in (a) in einer Konzentration von 0 bis 5 Gewichtsprozent vorhanden ist.

5. Verfahren nach irgendeinem der Ansprüche 1 bis 4, in welchem das Hydroxyalkylacrylat oder -methacrylat in (b) in einer Konzentration von weniger als 10 Gewichtsprozent vorhanden ist.

6. Verfahren nach irgendeinem der Ansprüche 1 bis 5, in welchem die Diacrylate in (c) in einer Konzentration von 1 oder weniger Gewichtsprozent vorhanden sind.

7. Verfahren nach irgendeinem der Ansprüche 1 bis 6, in welchem die Produkte, die von Michael-Addition, acrylischer Polymerisation, Umesterungsreaktionen oder anderen Nebenreaktionen herrühren, in (d) in einer Konzentration von 5 oder weniger Gewichtsprozent vorhanden sind.

8. Verfahren nach irgendeinem der Ansprüche 1 bis 7, in welchem in dem reaktiven Monomeren von (e) R, $R_1$, $R_2$, $R_3$, $R_4$ und $R_5$ für Wasserstoff stehen, x 5 ist und der Durchschnittswert von n 2 beträgt.

9. Verfahren nach irgendeinem der Ansprüche 1 und 3 bis 8, in welchem das einer oder die mehreren ethylenisch ungesättigten Monomeren in einer Konzentration von ungefähr 5 bis ungefähr 90 Gewichtsprozent vorhanden sind und die Zusammensetzung, die (a) bis (f) umfaßt, in einer Konzentration von ungefähr 90 bis ungefähr 5 Gewichtsprozent vorhanden ist.

10. Verfahren nach irgendeinem der Ansprüche 2 bis 8, in welchem das eine oder die mehreren ethylenisch ungesättigten Monomeren in einer Konzentration von ungefähr 5 bis ungefähr 90 Gewichtsprozent vorhanden sind, die Zusammensetzung, die (a) bis (f) umfaßt, in einer Konzentration von ungefähr 90 bis ungefähr 5 Gewichtsprozent vorhanden ist und das Isocyanatharz oder Aminoharz in einer Konzentration von ungefähr 5 bis ungefähr 50 Gewichtsprozent anwesend ist.

11. Verfahren nach irgendeinem der Ansprüche 1 bis 10, in welchem das eine oder die mehreren ethylenisch ungesättigten Monomeren ausgewählt sind aus der Gruppe, die aus Styrol, n-Butylacrylat, 2-Hydroxyethylacrylat, Methylmethacrylat, Decylacrylat, Cyclohexylacrylat, 2-Hydroxyethylacrylat, Vinylchlorid und Vinylacetat besteht.

**Revendications**

1. Procédé de préparation d'une composition polymérique, consistant à polymériser un ou plusieurs monomères à insaturation éthylénique avec une composition comprenant:

(a) 0 à 10% en poids d'une lactone,

(b) une quantité allant de plus de 0 à environ 20% en poids d'un acrylate ou méthacrylate d'hydroxyalkyle,

(c) une quantité égale ou inférieure à 2% en poids de diacrylates,

(d) une quantité égale ou intérieure à 10% en poids de produits résultant de réactions d'addition de Michael, de polymérisation acrylique, de transestérification ou d'autres réactions secondaires,

(e) une quantité allant du pourcentage restant à 100% en poids d'un monomère réactif répondant à la formule suivante:

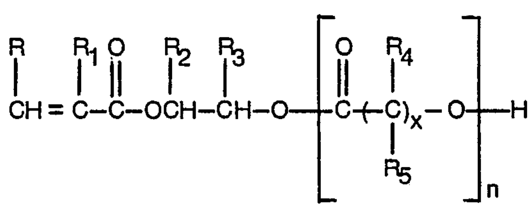

dans laquelle R, $R_1$, $R_2$ et $R_3$ représentent, indépendamment, l'hydrogène ou un groupe méthyle, $R_4$ et $R_5$ représentent, indépendamment, l'hydrogène ou un groupe alkyle ayant 1 à 12 atomes de carbone, *x* a une valeur de 4 à 7, et *n*, ainsi que la valeur moyenne de *n*, dans la composition, sont égaux ou supérieurs à 1, et

(f) une quantité inférieure à environ 100 parties par million de catalyseur.

2. Procédé de préparation d'une composition polymérique, réticulée consistant:

(1) à polymériser un ou plusieurs monomères à insaturation éthylénique avec une composition comprenant:

(a) 0 à 10% en poids d'une lactone,

(b) une quantité allant de plus de 0 à environ 20% en poids d'un acrylate ou méthacrylate d'hydroxyalkyle,

(c) une quantité égale ou inférieure à 2% en poids de diacrylates,

(d) une quantité égale ou intérieure à 10% en poids de produits résultant de réactions d'addition de Michael, de polymérisation acrylique, de transestérification ou d'autres réactions secondaires,

(e) une quantité allant du pourcentage restant à 100% en poids d'un monomère réactif répondant à la formule suivante:

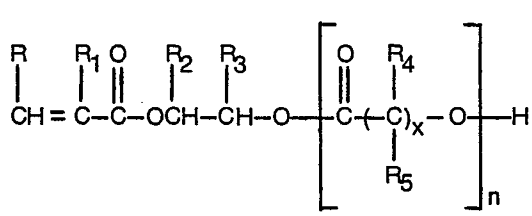

dans laquelle R, $R_1$, $R_2$ et $R_3$ représentent, indépendamment, l'hydrogène ou un groupe méthyle, $R_4$ et $R_5$ représentent, indépendamment, l'hydrogène ou un groupe alkyle ayant 1 à 12 atomes de carbone, *x* a une valeur de 4 à 7, et *n*, ainsi que la valeur moyenne de *n* dans la composition, sont égaux ou supérieurs à 1, et

(f) une quantité inférieure à environ 100 parties par million de catalyseur; et

(2) à réticuler la composition polymérique du paragraphe (1) avec une résine d'isocyante ou une résine aminée choisie dans le groupe comprenant des résins mélamine-formaldéhyde, urée-formaldéhyde et benzoguanamine-formaldéhyde.

3. Procédé suivant la revendication 1 ou 2, dans lequel le ou les monomères à insaturation éthylénique sont choisis dans le groupe comprenant le styrène, l'acrylate de n-butyle, l'acrylate de 2-hydroxyéthyle, l'acide acrylique, l'acrylate d'éthyle, l'acrylate de tertio-butyle, le méthacrylate de méthyle, l'acrylate de décyle, l'acrylate de cyclohexyle, le méthacrylate de 2-hydroxyéthyle, le chlorure de vinyle et l'acétate de vinyle.

4. Procédé suivant l'une quelconque des revendications 1 à 3, dans lequel la lactone en (a) est présente en une concentration de 0 à 5% en poids.

5. Procédé suivant l'une quelconque des revendication 1 à 4, dans lequel l'acrylate ou méthacrylate d'hydroxyalkyle en (b) est présent en une concentration inférieure à 10% en poids.

6. Procédé suivant l'une quelconque des revendications 1 à 5, dans lequel les diacrylates en (c) sont présents en une concentration égale ou inférieure à 1% en poids.

7. Procédé suivant l'une quelconque des revendications 1 à 6, dans lequel les produits résultant de réactions d'addition de Michael, de polymérisation acrylique, de transestérification ou d'autres réactions secndaires en (d) sont présents en une concentration égale ou inférieure à 5% en poids.

8. Procédé suivant l'une quelconque des revendications 1 à 7, dans lequel, dans le monomère réactif en (e), R, $R_1$, $R_2$, $R_3$, $R_4$ et $R_5$ représentent l'hydrogène, *x* est égal à 5 et la valeur moyenne de *n* est égale à deux.

9. Procédé suivant l'une quel conque des revendications 1 et 3 à 8, dans lequel le ou les monomères à insaturation éthylénique sont présents en une concentration d'environ 5 à environ 90% en poids, la composition comprenant les composés mentionnés en (a) à (f) étant présente à une concentration d'environ 90 à environ 5% en poids.

10. Procédé suivant l'une quelconque des revendications 2 à 8, dans lequel le ou les monomères à insaturation éthylénique sont présents en une concentration d'environ 5 à environ 90% en poids, la composition comprenant les composés mentionnés en (a) à (f) étant présente en une concentration d'environ 90 à environ 5% en poids et la résine d'isocyanate ou la résine aminée étant présente en une concentration d'environ 5 à environ 50% en poids.

11. Procédé suivant l'une quelconque des revendications 1 à 10, dans lequel le ou les monomères à insaturation éthylènique sont choisis dans le groupe comprenant le styrène, l'acrylate de n-butyle, l'acrylate de 2-hydroxyéthyle, le méthacrylate de méthyle, l'acrylate de décyle, l'acrylate de cyclohexyle, l'acrylate de 2-hydroxyéthyle, le chlorure de vinyle et l'acétate de vinyle.